# EUROPEAN PATENT APPLICATION

(11) **EP 1 405 966 A1**
(43) Date of publication of application: **07.04.2004**
(21) Application number: 02078426.0
(22) Date of filing: 19.08.2002
(51) Int. Cl.: E04H 7/18, B60S 5/02, E04B 1/68, F02B 43/10, G01B 11/16, G01M 7/00

(54) **Outletstation for hydrogen**

(71) Applicant: Vandenborre Technologies N.V, 2260 Oevel (BE); Waco-Liesbosch Beton B.V., 4612 PS Bergen op Zoom (NL); Paul de Lange Holding B.V., 5981 EM Panningen (NL)
(72) Inventor: Vandenborre, Jan Baptist Hugo, 2460 Kasterlee (BE); Van den Tol, Johan, 5617 MK Bergen op Zoom (NL); De Lange, Paulus Johannes Petrus, 5981 Em Panningen (NL)
(74) Representative: Van Breda, Jacobus

(57) **Abstract**

The invention relates to an outletstation for hydrogen comprising a production unit and at least one outlet-facility accessible for consumers and directly or indirectly connected to the production unit, whereby it comprises a subterranean basement which is impermeable for groundwater and rain, and whereby the basement houses the production unit.

## Description

The invention relates to an outletstation for hydrogen comprising a production unit and at least one outlet-facility accessible for consumers and directly or indirectly connected to the production unit.

Such an outletstation is known from practice and is used for instance for supplying fuel for citybusses. Although the invention primarily relates to application of such an outletstation for automotive purposes it is not confined thereto. The invention may for instance also apply for domestic purposes such as fuel supply for houses, office buildings and the like.

One of the purposes of the invention is to provide a safe means of manufacturing and/or storing and supplying hydrogen as a fuel for assorted applications. Another purpose is to prevent the need to transport liquified hydrogen by road.

Other purposes and advantages of the invention will become apparent from the discussion offered below.

The outletstation according to the invention is characterized in that it comprises a subterranean basement which is impermeable for groundwater and rain, and that the basement houses the production unit. This provides a secure and safe manufacturing environment allowing manufacturing in-situ, i.e. at the place at which the hydrogen can be fed into the consuming installation, for instance a storagetank of an automobile.

It is imperative that the basement is impermeable for groundwater and rain in order to prevent undesirable reactions of the water with the manufacturing process of the hydrogen. This condition is preferably secured by making the basement of concrete.

In order to further optimise the impermeability for water the seams of the basement are filled with filling material that crystallises in the presence of water.

In a further aspect of the invention the basement is provided with one or more liftable covering plates. This allows for placing and replacing production units that are designed to cope exactly with the local requirements.

In yet another aspect of the invention the bottom and/or walls and/or ceiling of the basement is/are provided with sensors for detecting structural changes in the material thereof. By this measure it is possible to detect faults that develop during the during the lifetime of the material of the basement. Prior to these faults developing in cracks or similar that are detrimental to the impermeability for ground water and rain, appropriate remedial action can then be implemented.

Appropriately the sensors comprise optical fibers applied in or on the bottom and/or walls and/or ceiling. Such optical fibers are combined with electronics that can measure optical changes and use these changes to indicate via an operator panel or otherwise that inspecting of the concerning basement part is required.

In yet another feature of the invention the outletstation is characterized in that the basement houses a compressor and storage facilities which are connected to the production unit. This measure allows for storage of the hydrogen.

For safety reasons it is desirable that the production unit is housed in a first room of the basement and the compressor and storage facilities are housed in a second room of the basement, whereby the first room and the second room are divided by a gastight wall.

Preferably the first room and/or the second room are provided with vent-channels for exiting excess gases, particularly escaped hydrogen.

Even more preferably the first room and/or the second room is/are provided with a sensor/sensors for monitoring safe production and/or storage conditions. This allows the sensor/sensors for monitoring safe production and/or storage conditions to provide input-signals to a computer that controls the production unit and/or one or more gas-release valves for releasing gas from the first room and/or the second room to the environment via the vent-channels.

As yet another feature of the invention supporting the security of the system the second room of the basement is filled with inert gas.

It is desirous that the inert gas is heavier than air.

In another aspect of the invention the outletstation is characterized in that the basement has a closeable opening at its top in order to allow access to the production unit. This allows for day-to-day maintenance regarding the production unit. Inasfar as the storage facilities or the compressor need maintenance they can be approached via a gastight door in the wall dividing the first room for the production unit and the second room for the compressor and the storage facilities.

Preferably the production unit of the outletstation according to the invention produces hydrogen with a process selected from the following group of processes:
- hydrolysis
- conversion from natural gas.

It is preferable that when the production unit produces hydrogen out of natural gas, a residue gas CO₂ is obtained that is applied as the inert gas for the second room of the basement.

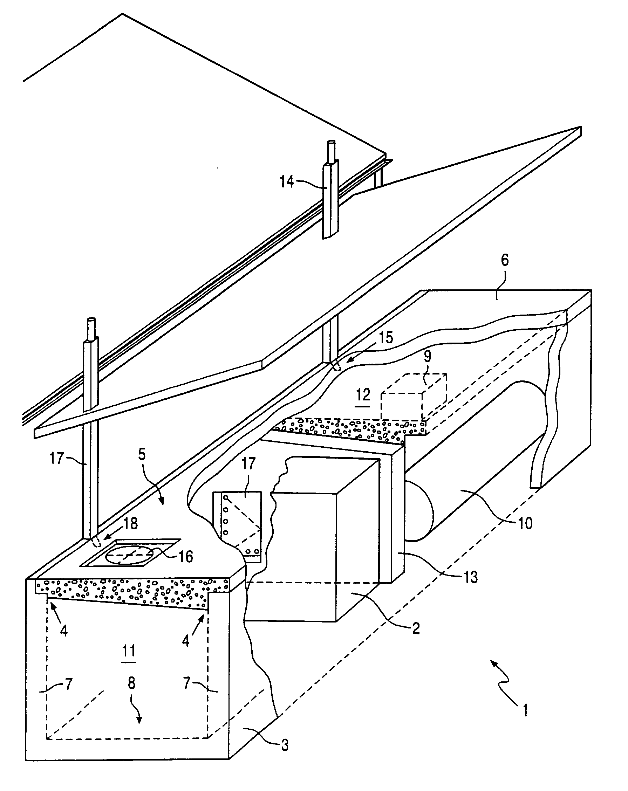

The invention shall now be further elucidated with reference to the drawing of a non-limiting exemplary embodiment.

The drawing shows in a single figure an outletstation for hydrogen for automotive applications.

The drawing shows an outletstation 1 for hydrogen comprising a production unit 2 and comprises (not shown) at least one outlet facility accessible for consumers, which facility is directly or indirectly connected to the production unit 2.

The production unit 2 is contained in a subterranean basement 3. The outlet facilities that are accessible for consumers are located on ground level.

The subterranean basement 3 is required to be impermeable for ground water and rain and is preferably made of concrete. The basement 3 is provided with a ceiling in the form of one or more liftable covering plates 5,6. It is preferable that seams 4 of the basement 3, for instance between the said covering plates 5,6 and the upstanding walls 7 of the basement 3 are filled with a filling material that crystallizes in the presence of water. This provides a further protection against creeping through water.

Preferably, although not shown in the drawing, the bottom 8 and/or the walls 7 and/or ceiling 5,6 of the basement 3 is/are provided with sensors for detecting structural changes in the material thereof. These sensors comprise preferably optical fibers applied in or on the said bottom and/or walls and/or ceiling of the basement. Such optical fibers undergo translucent changes influenced by the structural changes in the material of the basement 3 that are to be detected.

The drawing further shows that the basement 3 houses a compressor 9 and storage facilities 10 in the form of a tank, which are connected to the production unit 2.

For safety reasons the production unit 2 is housed in a first room 11 of the basement 3 and the compressor 9 and storage facilities 10 are housed in a second room 12 of the basement 3, whereby the first room 11 and the second room 12 are divided by a gastight wall 13.

The drawing further shows that the first room 11 and/or the second room 12 are provided with vent-channels 13, 14 for exiting access gases, particularly escaped hydrogen, which may otherwise give cause to a riscuous situation in regard of explosions.

In order to further support the safety of the outletstation according to the invention the first room 11 and/or the second room 12 is/are provided with a sensor/sensors for monitoring safe production and/or storage conditions. Such a sensor or sensors are known per se for the man skilled in the art; consequently their showing in the drawing is dispensed with.

The sensor or sensors for monitoring safe production and/or storage conditions provide input signals to a computer that controls the production unit, and/or one or more gas release valves 15, 16 for releasing gas from the first room 11 and/or the second room 12 to the environment via the vent-channels 13, 14.

The second room 12 in which the compressor 9 and the storage tank 10 are located can be filled with inert gas that is heavier than air. A suitable inert gas is CO₂ which may be obtained when the production unit produces hydrogen out of natural gas. In this process CO₂ is produced as a residue gas which may then be applied as the inert gas for the second room 12 of the basement 3.

The drawing also shows that the first room 11 is accessible via a closeable opening 16 and its top in order to allow access to the production unit 2. In case it is required that the second room 12 is accessed, the gastight wall 13 dividing the first room 11 and second room 12 has a gastight door 17 which normally remains closed but which can provide access to the second room 12 if circumstances so require.

## Claims

1. Outletstation (1) for hydrogen comprising a production unit and at least one outlet-facility accessible for consumers and directly or indirectly connected to the production unit (2), **characterized in that** it comprises a subterranean basement (3) which is impermeable for groundwater and rain, and that the basement (3) houses the production unit (2).

2. Outletstation according to claim 1, **characterized in that** the basement (3) is made of concrete.

3. Outletstation according to claim 1 or 2, **characterized in that** seams (4) of the basement (3) are filled with filling material that crystallises in the presence of water.

4. Outletstation according to any one of claims 1-3, **characterized in that**, the basement is provided with one or more liftable covering plates (5,6).

5. Outletstation according to any of the previous claims, **characterized in that** the bottom (8) and/or walls (7) and/or ceiling (5,6) of the basement (3) is/are provided with sensors for detecting structural changes in the material thereof.

6. Outletstation according to claim 5, **characterized in that** the sensors comprise optical fibers applied in or on the bottom and/or walls and/or ceiling.

7. Outletstation according to any one of the previous claims, **characterized in that** the basement (3) houses a compressor (9) and storage facilities (10) which are connected to the production unit (2).

8. Outletstation according to claim 7, **characterized in that** the production unit (2) is housed in a first room (11) of the basement (3) and the compressor (9) and storage facilities (10) are housed in a second room (12) of the basement (3), whereby the first room (11) and the second room (12) are divided by a gastight wall (13).

9. Outletstation according to claim 8, **characterized in that** the first room (11) and/or the second room (12) are provided with vent-channels (13,14) for exiting excess gases, particularly escaped hydrogen.

10. Outletstation for hydrogen according to claim 8 or 9, **characterized in that** the first room (11) and/or the second room (12) is/are provided with a sensor/sensors for monitoring safe production and/or storage conditions.

11. Outletstation according to claim 10, **characterized in that** the sensor/sensors for monitoring safe production and/or storage conditions provide input-signals to a computer that controls the production unit and/or one or more gas-release valves (15,16) for releasing gas from the first room (11) and/or the second room (12) to the environment via the vent-channels (13,14).

12. Outletstation according to any one of claims 8-11, **characterized in that** the second room (12) of the basement (3) can be filled with inert gas.

13. Outletstation according to claim 12, **characterized in that** the inert gas is heavier than air.

14. Outletstation according to any of previous claims, **characterized in that** the basement (3) has a closeable opening at its top in order to allow access to the production unit (2).

15. Outletstation according to any one of the previous claims, **characterized in that** the production unit produces hydrogen with a process selected from the following group of processes:
- hydrolysis
- conversion from natural gas.
